# EUROPEAN PATENT APPLICATION

(11) **EP 3 657 663 A1**
(43) Date of publication of application: **27.05.2020**
(21) Application number: 18207481.5
(22) Date of filing: 21.11.2018
(51) Int. Cl.: H02M 7/5387, H02P 3/22, B60L 3/00, H02M 1/32

(54) **INVERTER, VEHICLE AND METHOD FOR OPERATING AN INVERTER**

(71) Applicant: Valeo Siemens eAutomotive Germany GmbH, 91056 Erlangen (DE)
(72) Inventor: BOHLLÄNDER, Marco, 96114 Hirschaid (DE); WIEDMANN, Karsten, 91080 Spardorf (DE); TIAN, Shan, 91054 Erlangen (DE); HEROLD, Christian, 91056 Erlangen (DE)
(74) Representative: Dr. Gassner & Partner mbB

(57) **Abstract**

Inverter (2), notably for a vehicle (1), comprising two DC supply lines (7, 8), at least three half-bridges (11a-11c) each having a switching element (12a-12c) being connected to one of the DC supply lines (7) and a switching element (13a-13c) being connected to the other DC supply line (8) and a control unit (19) having an active short circuit section (21) configured to control the switching elements (12a-12c, 13a-13c), upon receiving a request signal (23), to adopt a first switching pattern, according to which the switching elements (13a-13c) being connected a first DC supply line (8) are turned on and the switching elements (12a-12c) being connected to a second DC supply line (7) are turned off, wherein the control unit further comprises a detection section (22) being configured to provide a detection signal (26) upon detecting that the first switching pattern is not adopted by the switching elements (12a-12c, 13a-13c), and the active short circuit section (21) is configured to control the switching elements (12a-12c, 13a-13c), upon receiving the detection signal (26), to adopt a second switching pattern, according to which the switching elements (12a-12c) being connected to the second DC supply line (7) are turned on and the switching elements (13a-13c) being connected to first DC supply line (8) are turned off.

## Description

The present invention refers to an inverter, notably for a vehicle, comprising two DC supply lines, at least three half-bridges each having a switching element being connected to one of the DC supply lines and a switching element being connected to the other DC supply line and a control unit having an active short circuit section configured to control the switching elements, upon receiving a request signal, to adopt a first switching pattern, according to which the switching elements being connected a first DC supply line are turned on and the switching elements being connected to a second DC supply line are turned off.

Besides, the present invention refers to a vehicle and a method for operating an inverter.

In case of a failure of an electric driven vehicle it is required to put its drive train into a safe state, which allows a torque-free roll-out of the vehicle. It is known to realize such a safe state by means of an active short circuit (ASC) performed by an inverter. Therein, switching elements being connected to a DC supply line are controlled to be turned on and switching elements being connected to the other DC supply line are controlled to be turned off. Typically, a control unit of the inverter provides a corresponding switching pattern that realizes the active short circuit instead of control signals for power conversion.

However, adopting or maintaining the aforementioned switching pattern may not be successful due to various failures. Disadvantageously, known inverters may not reliably realize the safe state by switching the active short circuit.

Thus, it is an object of the present invention to provide a possibility to control an inverter to perform an active short circuit more reliably.

The above object is solved by an inverter as initially described, wherein the control unit further comprises a detection section being configured to provide a detection signal upon detecting that the first switching pattern is not adopted by the switching elements, and the active short circuit section is configured to control the switching elements, upon receiving the detection signal, in order to adopt a second switching pattern, according to which the switching elements being connected to the second DC supply line are turned on and the switching elements being connected to first DC supply line are turned off.

The invention is based on the consideration that the first switching pattern may not be adopted because at least one of the switching elements cannot be successfully turned on or off by the active short circuit section, which results in failing to adopt the first switching pattern. However, an active short circuit may be realized:
- either by turning on the switching elements being connected to the first DC supply line and turning off the switching elements being connected to the second DC supply line
- or by turning on the switching elements connected to the second supply line and turning off the switching elements being connected to the first DC supply line.

Therefore, the invention proposes to realize the active short circuit in this case by means of the second switching pattern according to which the switching element that cannot be turned on or off by the active short circuit section is in a complementary switching state with respect to the first switching pattern.

Advantageously, the present invention allows to realize the active short circuit although one of the switching elements cannot be switched by the active short circuit section according to the first switching pattern. This increases the reliability of the inverter, when it is to be put into a safe state. Thus, the inverter and the entire vehicle may be operated more robustly.

In particular, the DC supply lines are respectively a high potential side and a low potential side of one DC supply.

Typically, the switching elements are voltage-controlled semiconductor switching elements. Each switching element may comprise an insulated gate bipolar transistor (IGBT) and a diode being connected in parallel thereto. Alternatively, each switching element may comprise an insulated gate field-effect transistor, such as a power MOSFET or a HEMT (High-Electron-Mobility Transistor). Particularly, the control unit further comprises a main control unit configured to provide pulsing switching signals so as to convert a DC voltage at an input of the inverter into an AC current at an output of the inverter. Preferably, the active short circuit section of the control unit is configured to overrule control signals provided by the main control section after having received the request signal. The inverter may comprise an input for receiving the request signal, e.g. from an external electronic control unit (ECU) or a vehicle control unit (VCU). However, the request signal may also be generated internally.

In particular, the detection section is configured to provide the detection signal upon detecting that at least one of the switching elements connected to the second DC supply line is short-circuited. This increases the reliability, if the switching element remains turned on due to a short-circuit of its switching path.

Furthermore, the inventive inverter may comprise phase lines being connected to each terminal between the switching elements of a half bridge and a current detection unit configured to detect a current value for each phase line.

Therein, it is preferred that the detection section is configured to detect that the first switching pattern is not adopted depending on the current values. If active short circuit is properly adopted, transient currents induced from an electric machine connected to an output of the inverter will decay symmetrically. Thus, deviations from this current distribution may be used to detect that the first switching pattern is not adopted.

Particularly, the detection section is configured to detect that the first switching pattern is not adopted by means of a detection criterion comprising the condition that two of the current values reach or cross a predetermined threshold level. Such a current distribution may result when one switching element being controlled to be turned off according to the first switching pattern is conductive. Then, current from a DC supply line may flow through one phase line to the AC output, where it splits up in windings of the electric machine and flows back along the other phase lines. Thus, a 2-of-3-decision is an effective way to detect that switching the active short circuit failed.

Alternatively, the detection section may be configured to detect that the first switching pattern is not adopted by means of a detection criterion comprising the condition that a first current value reaches or crosses a predetermined first threshold level and a second current value reaches or crosses a predetermined second threshold level being different from the first threshold level. Due to the phase current being split up, the absolute value of a current flowing out of the output of the inverter along one phase line raises faster than the absolute value of the other currents flowing into the output. When the first current value has reached or crossed the first threshold value, the absolute current values of other phase lines can be checked for reaching or crossing the second threshold level than the first threshold level.

In order to provide a more specific detection, the detection criterion may comprise the additional condition that the current values describe flow directions of the phase currents in different directions.

According to a highly preferred implementation, the detection section comprises an overcurrent protection subsection being configured to trigger the request signal when one of the current values reaches or crosses a predetermined threshold level, wherein the detection section is configured to detect whether the request signal has been triggered by the overcurrent protection subsection, if the request signal has been triggered by the overcurrent protection subsection, to detect whether the current value reaching or crossing the threshold level decays within a predetermined time span, and to provide the detection signal if the current value has not decayed and not to provide the detection signal if the current value has decayed. Thereby, a wrong detection may be avoided when the overcurrent protection subsection triggers the request signal only because of a transient current.

With respect to the inverter according to the invention it is preferred that the active short circuit section is configured to wait for a predetermined time span before controlling the switching elements to adopt the second switching pattern. Typically, the time span amounts between 1 µs and 10 µs.

Therein, the active short circuit section may be configured to control all switching elements to be turned off while waiting. Thereby, a bridge short-circuit when changing from the first switching pattern to the second switching pattern is prevented by controlling all switching elements to be turned off.

Advantageously, the inverter according to the invention comprises a desaturation handling section configured to detect a desaturation of a switching element and, when the desaturation is detected, to turn off the switching element by overruling control of the switching element by the control unit. The desaturation handling section allows to protect the switching element from damage due to desaturation. However, turning off the switching element by means of the desaturation handling section may be the reason for the switching element being not controllable by the active short circuit section. Hence, the inventive inverter allows to put the inverter into the safe state and to protect the switching elements from desaturation, simultaneously. Typically, the desaturation handling section forms part of a driver unit of the inverter. Particularly, a desaturation handling section is provided for each switching element.

Therein, it has to be noted that it is not sufficient to simply use a signal of the desaturation handling section for determining that the first switching pattern is not adopted properly since such a conclusion depends on other additional conditions. Therefore, it would be necessary to implement a complex control logic to realize such a desaturation-based determination, which can be avoided by the determination based on current values as described afore.

Besides, the above object is solved by a vehicle, comprising an electric machine configured to drive the vehicle and an inverter according to the invention being configured to drive the electric machine.

Furthermore, the above object is solved by a method for operating an inverter comprising two DC supply lines and at least three half-bridges each having a switching element being connected to one of the DC supply lines and a switching element being connected to the other DC supply line, comprising the steps of: upon receiving a request signal, controlling the switching elements to adopt a first switching pattern, according to which the switching elements being connected a first DC supply line are turned on and the switching elements being connected to a second DC supply line are turned off; providing a detection signal upon detecting that the first switching pattern is not adopted by the switching elements; and upon receiving the detection signal, controlling the switching elements to adopt a second switching pattern, according to which the switching elements being connected to the second DC supply line are turned on and the switching elements being connected to first DC supply line are turned off.

Preferably, when controlling the switching elements to adopt the first switching pattern, a desaturation of a switching element of a half bridge that is controlled to be turned on, is detected, after which the switching element is turned off and the detection signal is provided due to the switching element is turned off. Furthermore, the desaturation of the switching element may be detected due to the other switching element of the half-bridge is shorted.

All statements referring to the inventive inverter apply analogously to the inventive vehicle and the inventive method, so that the above-mentioned advantages may be achieved as well.

Further details and advantages of the invention are disclosed in the following, wherein reference is made to the schematic drawings, which show:
- Fig. 1: a block diagram of an embodiment of the vehicle according to the invention comprising an embodiment of the inverter according to the invention;
- Fig. 2: a switching configuration of an unsuccessful active short circuit while operating the inverter depicted in Fig. 1; and
- Fig. 3: a diagram of phase currents while operating the inverter depicted in Fig. 1.

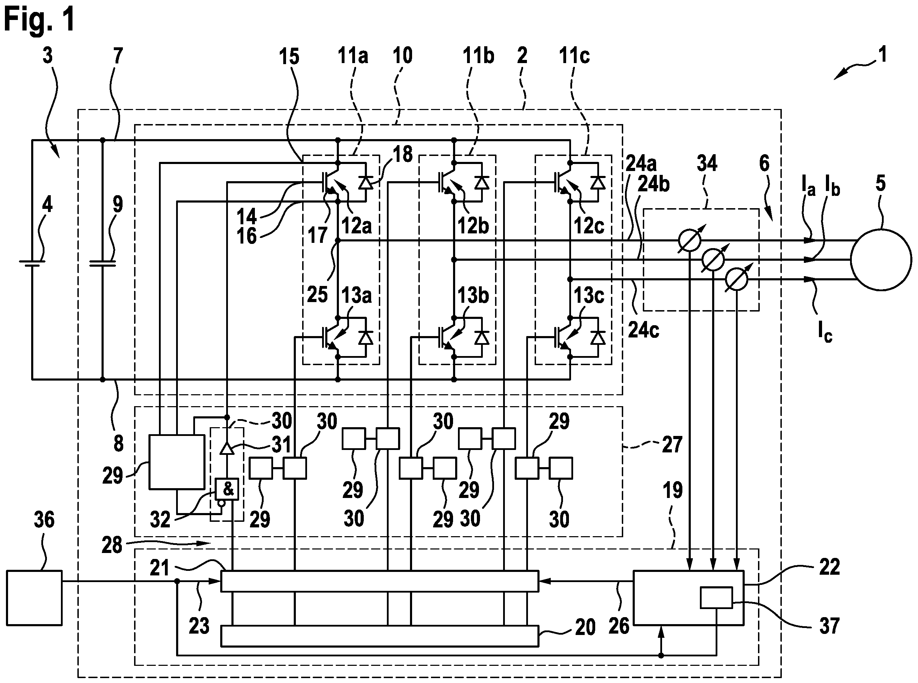

Fig. 1 is a block diagram of an embodiment of a vehicle 1, comprising an embodiment of an inverter 2, which is configured to convert a DC voltage provided by a high-voltage battery 4 at an input 3 into a multiphase AC current for an electric machine 5 at an output 6 of the inverter 2.

The inverter 2 comprises a top-side DC supply line 7 and a bottom-side DC supply line 8, between which a DC link capacitor 9 is connected. A power unit 10 of the inverter 2 includes three half-bridges 11a, 11b, 11c each having a switching element 12a, 12b, 12c connected to the top-side DC supply line 7 and a switching element 13a, 13b, 13c connected to the bottom-side DC supply line 8. Each switching element 12a-12c, 13a-13c, comprises a control terminal 14 and two further terminals of 15, 16, between which a switching path controllable by a voltage supplied to the control terminal 14 is formed. The switching elements 12a-12c, 13a-13c comprise, exemplarily, an insulated gate bipolar transistor (IGBT) 17 and a diode 18 connected in anti-parallel thereto. Alternatively, each switching element 12a-12c, 13a-13c comprises a power MOSFET or HEMT.

Furthermore, the inverter 2 comprises a control unit 19 including a main control section 20, an active short circuit section 21 and a detection section 22.

The main control unit section 20 is configured to provide pulsing switching signals to each switching element 12a-12c, 13a-13c causing the power unit 10 to convert the DC voltage provided at the input 3 into the AC current at the output 6 in a normal operation mode of the inverter 2.

The active short circuit section 21 is configured to control the switching elements upon receiving a request signal 23 to change the inverter 2 from the normal operation mode into a safe state. Thereto, the active short circuit section 21 is configured to control the switching elements 12a-12c, 13a-13c to adopt a first switching pattern, according to which the switching elements 13a-13c being connected to the bottom-side DC supply line 8 are turned on and the switching elements 12a-12c being connected to the top-side DC supply line 7 are turned off. This causes phase lines 24a, 24b, 24c being connected to a terminal 25 between the switching element 12a-12c and the switching element 13a-13c of each half bridge 11a-11c to be short-circuited. Thereby, phase currents Iₐ, I_{b}, I_{c} induced by the electric machine 5 decay and allow the vehicle 1 to roll out safely. In order to provide the first switching pattern, the active short circuit section 21 overrules any switching signal provided by the main control section 20.

Additionally, the active short circuit section 21 is configured to control the switching elements 12a-12c, 13a-13c to adopt a second switching pattern, according to which the top-side switching elements 12a-12c are turned on and the bottom-side switching elements 13a-13c are turned off, upon receiving a detection signal 26 that indicates that the first switching pattern is not properly adopted by the switching elements 12a-12c, 13a-13c. Thereto, the detection section 22 is configured to detect that the first switching pattern is not adopted and to provide the detection signal 26 to the active short circuit section 21. For example, the active short circuit section 21 can be implemented as a function in a microcontroller or by other logic circuit.

Furthermore, the inverter 2 comprises a driver unit 27 connected between each control terminal 14 and the control unit 19. The driver unit 27 is configured to adjust the voltage levels of control signals 28 provided by the control unit 19 for each control terminal 14. The driver unit 27 comprises desaturation handling sections 29 and a driver section 30 for each switching element 12a-12c, 13a-13c.

Therein, a respective desaturation handling unit 29 is connected to one or both of the terminals 15, 16 and to the control terminal 14 of one switching element 12a-12c, 13a-13c, wherein in Fig. 1 corresponding connections are depicted for the desaturation handling section 29 assigned to the switching element 12a only for reasons of simplicity. The desaturation handling section 29 is configured to detect a desaturation of a switching element 12a-12c, 13a-13c based on voltages between the terminals 14-16. Therein, the desaturation is assumed, when the switching element 12a-12c, 13a-13c is operated in its active operation range.

Each driver section 30 comprises an output stage 31 that obtains an output signal of a logic gate 32. The logic gate 32 realizes a logic AND-operation and obtains a logic signal from the desaturation handling section 29 at an inverted input. Thus, when a logic "0" indicating no desaturation of the switching element 12a-12c, 13a-13c is received at the inverted input, the control signal 28 passes the logic gate 32 and is amplified by the output stage 31. Otherwise, when a logic "1" indicates a desaturation of the switching element 12a-12c, 13a-13c, the logic gate 32 blocks the control signals 28 and causes the switching element 12a-12c, 13a-13c to be turned off. Thus, all control signals 28 regardless of whether they are generated by the main control section 20 or by the active short circuit section 21 are overruled by the desaturation handling section 29 in order to protect the switching elements 12a-12c, 13a-13c from being damaged by a high power operation in the active operation range.

In the following an exemplarily situation, in which the first switching pattern is not adopted is described in detail:

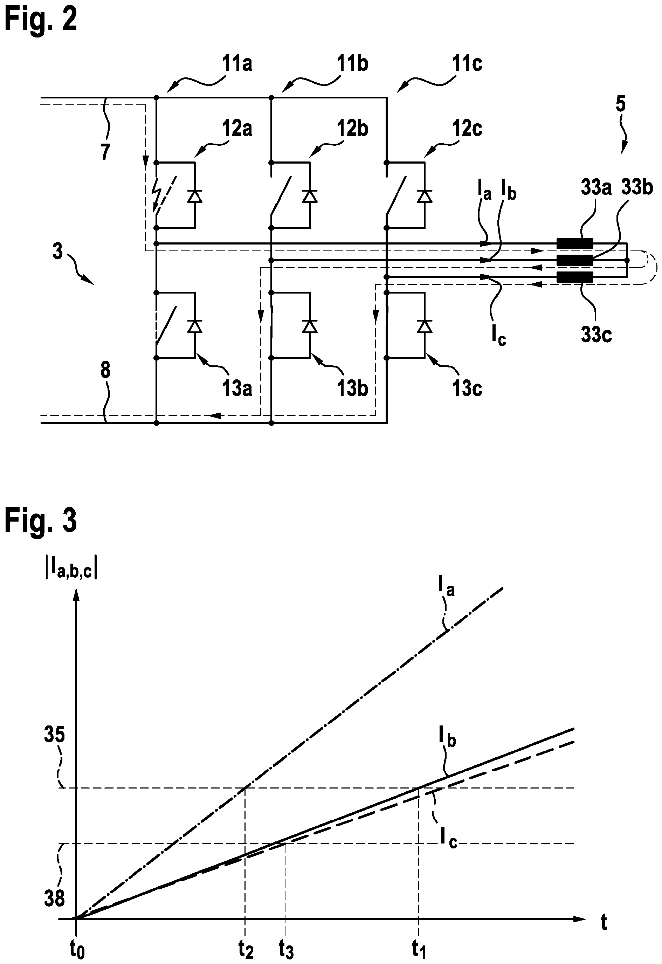

Fig. 2 shows a switching configuration that may occur when the active short circuit section 21 controls the switching elements 12a-12c, 13a-13c to adopt the first switching pattern, according to which the switching element 13a is turned on as depicted by a dashed switch symbol and the switching elements 13b, 13c are turned on as well, whereas the switching element 12a is controlled to be turned off as depicted by a dashed switch symbol and the switching elements 12b, 12c are turned off as well.

When the switching element 12a is shorted due to a damage depicted by a flash symbol and if the switching element 13a is properly turned on according to the first switching pattern, a bridge short-circuit of the half-bridge 11a occurs, which causes the switching element 13a to be operated in its active operation range. As this is detected by the desaturation handling section 29 assigned to the switching element 13a, the desaturation handling section 29 outputs a logic "1" causing the driver section 30 assigned to the switching element 13a to turn it off.

However, due to turning off the switching element 13a the active short circuit is corrupted. Consequently, a current depicted by dashed lines flows from the top-side DC supply line 7 through the switching element 12a into the phase line 24a, splits up inside stator windings 33a, 33b, 33c of the electric machine 5 and flows back along the phase lines 24b, 24c through the switching elements 13b, 13c to the bottom-side DC supply line 8.

Fig. 3 depicts absolute values of phase currents Iₐ, I_{b}, I_{c} according to a current distribution illustrated by dashed lines in Fig. 2. As can be seen, the absolute values of the phase currents Iₐ, I_{b}, I_{c} rise starting from a time to, at which the switching element 13a is turned off because the switching element 12a is shorted. Therein, the phase current Iₐ rises faster than the absolute value of the phase currents I_{b}, I_{c}. The phase current Iₐ is split up inside the electric machine 5 between I_{b}, I_{c}: Iₐ = I_{b} + I_{c}.

For detecting the above-mentioned situation, the inverter 2 comprises a current detection unit 34 (see Fig. 1) connected between the power unit 10 and the output 6 and configured to detect a current value for each phase line 24a-24c. The current values are provided to the detection section 22 of the control unit 19. The detection section 22 is configured to detect that the first switching pattern is not adopted by means of a detection criterion comprising the condition that two of the current values reach or cross a predetermined threshold level 35 (see Fig. 3) and the condition that the current values describe flow directions of the phase currents in different directions. Therein, the flow direction of a respective current corresponds to whether the current flows to the electric machine 5 or from the electric machine 5. For example, the current flowing towards the electric machine 5 has a forward (or positive) direction and the current flowing from the electric machine 5 has a reverse (or negative) direction. Thus, at a time t₁ the current value of the phase current Iₐ being in forward direction and the current value of the phase current I_{b} being in reverse direction cross the threshold level 35, which causes the detection unit 22 to provide the detection signal 26 to the active short circuit section 21. Upon receiving the detection signal 26 the active short circuit section 21 waits a predefined time span between 1 µs and 10 µs and provides the control signals 28 according to the second switching pattern. Note, that the shorted state of the switching element 12a does not affect the top-side active short circuit realized thereby as the switching element 12a has to be conducting according to the second switching pattern.

Typically, the request signal 23 is obtained from an external electric control unit (ECU) 36 of the vehicle 1 that performs overall control of a drive train. However, according to the present embodiment the request signal is provided as well, when an overcurrent protection subsection 37 of the detection section 22 detects that one of the phase currents Iₐ, I_{b}, I_{c} reaches or crosses the threshold level 35 (see Fig. 3).

In order to manage this kind of active short circuit request the detection section 22 is configured to detect, whether the request signal has been triggered by the overcurrent protection subsection 37. In this case, the detection section 22 detects, whether the current value exceeding the threshold level 35 decays within a predetermined additional time span. If the current value decays, the first switching pattern is assumed to be properly adopted so that no change to the second switching pattern is necessary. If the current value does not decay within the time span, it is assumed that the first switching pattern is not properly adopted and the detection signal 26 is provided to the active short circuit section 21.

According to a further embodiment of the inverter 1, the detection criterion comprises the conditions that one current value representing a phase current Iₐ in forward direction reaches or crosses the first threshold level 35 (see Fig. 3) and that the absolute value of another current value representing a phase current I_{b} in reverse direction reaches or crosses a second threshold level 38. As can be seen from Fig. 3, at a time t₂ the phase current Iₐ crosses the first threshold level 35, after which the detection section 22 monitors the other phase current I_{b}, I_{c}. At a time t₃ the absolute value of the phase current I_{b} crosses the second threshold level 38, which indicates the erroneous current distribution depicted in Fig. 2. Thus, by using two threshold levels 35, 38 the detection signal 26 can be provided before the time ti, at which the detection signal 26 is triggered in the first embodiment.

According to further embodiments of the inverter 1, the first switching pattern provides a top-side active short circuit, according to which the switching elements 12a-12c are controlled to be turned on and the switching elements 13a-13c are controlled to be turned off, whereas the second switching pattern provides a bottom-side active short circuit, according to which the switching elements 13a-13c are controlled to be turned on and the switching element 12a-12c are controlled to be turned off. Then, in the situation in which a top-side active short circuit is requested and a shorted bottom-side switching element 13a-13c is detected, an unsuccessful active short circuit caused by a shorted bottom-side switching element 13a-13c is detected and a bottom-side active short circuit is implemented.

## Claims

1. Inverter (2), notably for a vehicle (1), comprising two DC supply lines (7, 8), at least three half-bridges (11a-11c) each having a switching element (12a-12c) being connected to one of the DC supply lines (7) and a switching element (13a-13c) being connected to the other DC supply line (8) and a control unit (19) having an active short circuit section (21) configured to control the switching elements (12a-12c, 13a-13c), upon receiving a request signal (23), to adopt a first switching pattern, according to which the switching elements (13a-13c) being connected a first DC supply line (8) are turned on and the switching elements (12a-12c) being connected to a second DC supply line (7) are turned off,
**characterized in that**
the control unit further comprises a detection section (22) being configured to provide a detection signal (26) upon detecting that the first switching pattern is not adopted by the switching elements (12a-12c, 13a-13c), and the active short circuit section (21) is configured to control the switching elements (12a-12c, 13a-13c), upon receiving the detection signal (26), to adopt a second switching pattern, according to which the switching elements (12a-12c) being connected to the second DC supply line (7) are turned on and the switching elements (13a-13c) being connected to first DC supply line (8) are turned off.

2. Inverter according to claim 1, wherein the detection section (22) is configured to provide the detection signal (26) upon detecting that at least one of the switching elements (12a-12c) connected to the second DC supply line (7) is short-circuited.

3. Inverter according to claim 1 or 2, comprising phase lines (24a-24c) being connected to each terminal (25) between the switching elements (12a-12c, 13a-13c) of a half-bridge (11a-11c) and a current detection unit (34) configured to detect a current value for each phase line (24a-24c).

4. Inverter according to claim 3, wherein the detection section (22) is configured to detect that the first switching pattern is not adopted depending on the current values.

5. Inverter according to claim 4, wherein the detection section (22) is configured to detect that the first switching pattern is not adopted by means of a detection criterion comprising the condition that two of the current values reach or cross a predetermined threshold level (35).

6. Inverter according to claim 4, wherein the detection section (22) is configured to detect that the first switching pattern is not adopted by means of a detection criterion comprising the condition that a first current value reaches or crosses a predetermined first threshold level (35) and a second current value reaches or crosses a predetermined second threshold level (38) being different from the first threshold level (35).

7. Inverter according to claim 5 or 6, wherein the detection criterion comprises the additional condition that the current values describe flow directions of the phase currents in different directions.

8. Inverter according to any of claims 3 to 7, wherein the detection section (22) comprises an overcurrent protection subsection (37) being configured to trigger the request signal (23) when one of the current values reaches or crosses a predetermined threshold level (35), wherein the detection section (22) is configured
- to detect whether the request signal (23) has been triggered by the overcurrent protection subsection (37),
- if the request signal (23) has been triggered by the overcurrent protection subsection (37), to detect whether the current value reaching or crossing the threshold level (35) decays within a predetermined time span, and
- to provide the detection signal (26) if the current value has not decayed and not to provide the detection signal (26) if the current value has decayed.

9. Inverter according to any of the preceding claims, wherein the active short circuit section (21) is configured to wait for a predetermined time span before controlling the switching elements (12a-12c, 13a-13c) to adopt the second switching pattern.

10. Inverter according to claim 10, wherein the active short circuit section (21) is configured to control all switching elements (12a-12c, 13a-13c) to be turned off while waiting.

11. Inverter according to any of the preceding claims, comprising a desaturation handling section (29) configured to detect a desaturation of a switching element (12a-12c, 13a-13c) and, when the desaturation is detected, to turn off the switching element (12a-12c, 13a-13c) by overruling control of the switching element (12a-12c, 13a-13c) by the control unit (19).

12. Vehicle (1), comprising an electric machine (5) configured to drive the vehicle (1) and an inverter (2) according to any of the preceding claims being configured to drive the electric machine (5).

13. Method for operating an inverter (2) comprising two DC supply lines (7, 8) and at least three half-bridges (11a-11c) each having a switching element (12a-12c) being connected to one of the DC supply lines (7) and a switching element (13a-13c) being connected to the other DC supply line (8), comprising the steps of:
- upon receiving a request signal (23), controlling the switching elements (12a-12c, 13a-13c) to adopt a first switching pattern, according to which the switching elements (13a-13c) being connected a first DC supply line (8) are turned on and the switching elements (12a-12c) being connected to a second DC supply line (7) are turned off;
- providing a detection signal (26) upon detecting that the first switching pattern is not adopted by the switching elements (12a-12c, 13a-13c); and
- upon receiving the detection signal (26), controlling the switching elements (12a-12c, 13a-13c) to adopt a second switching pattern, according to which the switching elements (13a-13c) being connected to the second DC supply line (7) are turned on and the switching elements (13a-13c) being connected to first DC supply line (8) are turned off.

14. Method according to claim 13, wherein, when controlling the switching elements (12a-12c, 13a-13c) to adopt the first switching pattern, a desaturation of a switching element (13a) of a half-bridge (11a) that is controlled to be turned on, is detected, after which the switching element (13a) is turned off and the detection signal (26) is provided due to the switching element (13a) is turned off.

15. Method according to claim 14, wherein the desaturation of the switching element (13a) is detected due to the other switching element (12a) of the half-bridge (11a) is shorted.
